# EUROPEAN PATENT APPLICATION

(11) **EP 1 118 561 A1**
(43) Date of publication of application: **25.07.2001**
(21) Application number: 00204539.1
(22) Date of filing: 15.12.2000
(51) Int. Cl.: B65G 57/06, B65G 57/24

(54) **Method and apparatus for bringing products onto pallets or like supporting devices**

(30) Priority: 15.12.1999 NL 1013858; 30.05.2000 NL 1015345
(71) Applicant: Machinefabriek Westerhof B.V., 7591 BN Denekamp (NL); A.R.T. Advanced Reliable Technology, 7582 BL Losser (NL)
(72) Inventor: Franke, Robert Wilhelmus, 7582 BL Losser (NL)
(74) Representative: Prins, Adrianus Willem

(57) **Abstract**

A method for bringing products, in particular deformable products (65), onto pallets or like supporting devices (51), wherein a number of products (65) are brought onto a belt (7) of a reciprocating belt device (3) or like transfer device, whereafter the reciprocating belt device (3) is partly brought into a position above a supporting device (51), such that the products (65) extend in or above the supporting device (51), whereafter the reciprocating belt device (3) is retracted, with simultaneous manipulation of the belt (7), such that the upper surface of the belt (7), at least the products (65), stand still relative to the supporting device (51), viewed in the direction of movement of the reciprocating belt device (3), and leave the belt (7) along a free end, wherein mechanical means (67) are employed with which the position of the products (65) with respect to the supporting device (51) viewed in horizontal direction is retained when fluctuations occur in the speed of movement of the reciprocating belt device (3), in particular in case of fluctuations in said speed of movement relative to the speed of movement of the belt (7).

## Description

This invention relates to a method for bringing products onto pallets or like supporting devices. More particularly, this invention relates to a method for stacking sack-shaped products such as sacks filled with tubers, bulbs such as potatoes and the like onto roller containers. Such a method is known, for instance, from DE 33 00 329 A1.

In this known method, use is made of a reciprocating-type belt device. It comprises an endless belt, passed over two end rollers, which belt is drivable by means of a motor. The end rollers and the belt are incorporated in an auxiliary frame which by means of a hydraulic cylinder is movable in a base frame, in forward and backward direction, viewed in the longitudinal direction of the belt. During use, with the reciprocating belt device moved backwards, products are laid onto the upper part of the belt adjacent the forward free end thereof, which products are to be placed on a pallet or like supporting device. After the products have been placed, the reciprocating belt device is moved, by the free end thereof, above the supporting device by forward movement of the auxiliary frame with the belt. During forward movement of the auxiliary frame, the motor is not energized, so that the belt is held still. Upon backward movement of the auxiliary frame, the motor is energized, such that the belt is driven in the direction towards the forward free end. The driving speed of the belt is then chosen such that the products on the upper part substantially stand still, at least, viewed in horizontal direction, with respect to the supporting device and the base frame. The auxiliary frame and the belt are, so to speak, pulled away from under the products. As a result, the products can be placed onto the supporting device, or on products already placed thereon, substantially without horizontal speed.

In this known method, problems arise in the synchronization between the hydraulic cylinder, at least the movement of the auxiliary frame thereby controlled, and the motor, in particular the driving speed of the belt. As a result, the products will still have a measure of horizontal speed when being released from the belt, so that no optimum positioning of the products is obtained. In particular changes in the working pressure of the cylinder will lead to fluctuations in the speeds of movement. Moreover, a control for such an apparatus is complex and costly, so that use of this known method is relatively costly and susceptible to failure. Further, it has been found that such an apparatus is energetically disadvantageous to some extent, in particular in that a motor is necessary for driving the belt.

The object of the invention is to provide a method of the type described in the preamble, wherein the disadvantages mentioned of the known method are avoided, while maintaining the advantages thereof. To that end, a method according to the invention is characterized by the features according to claim 1.

By the use of the mechanical means with which the position of the products with respect to the supporting device viewed in at least horizontal direction is retained, the advantage is achieved that fluctuations in the speed of movement of the reciprocating belt device, in particular during retraction thereof, can be simply taken up, also when this speed of movement fluctuates with respect to the speed of movement, if any, of the belt of the reciprocating belt device. In this way, better than in the known method, the horizontal speed of the products is reduced to zero during the retraction of the reciprocating belt device, so that a better positioning on the supporting device or on products already deposited thereon is obtained. In fact, in the known method, as a result of the use of hydraulic or pneumatic cylinders, fluctuations may arise in the speed of movement, certainly when this method is used with different products, in particular with products of different weights.

In a first advantageous embodiment, a method according to the invention is characterized by the features according to claim 2.

In this embodiment, using the mechanical means, in particular engagement means, the upper part of the belt of the reciprocating belt device is retained during the retraction of the reciprocating belt device. This means that at least the portion of the upper part that is retained by the engagement means will not move, regardless of the movement of the reciprocating belt device, in particular regardless of fluctuations in the speed of movement of the driving means. Products which upon engagement of the engagement means are located substantially between said free end and said engagement means will in this method come clear of the belt, in that the belt, as it were, is pulled from under the products. In contrast with the known method, this does not require the belt to be driven. The retracting movement of the reciprocating belt device cannot as such have any influence on the movement of the products here, so that it can be simply guaranteed that products can be deposited onto the supporting device straight under their initial position. Due to the feature that in a method according to the invention as described hereinbefore the belt is not driven when the upper part is retained, the whole movement of the reciprocating belt device and the resultant movement of at least a part of the belt is obtained through the driving means for moving the reciprocating belt device, so that a particularly simple control is possible. Since fluctuations in the driving speeds in this method are of no importance, at least of little importance, these driving means can be made of relatively simple design.

In a further elaboration, a method according to the invention is further characterized by the features according to claim 4.

In such a method, in an optimum manner, use can be made of the space on the belt of the reciprocating belt device, thereby enabling fast and effective loading. In fact, since during retraction of the reciprocating belt device the upper part of the reciprocating belt, at least the part thereof located, with respect to the free end, behind the engagement means, is held still, products can already be deposited thereon while the reciprocating belt device is still being moved backwards. This enables relatively fast work.

In a second alternative embodiment, a method according to the invention is characterized by the features according to claim 5.

Owing to the feature that in this embodiment retaining means are moved, at least held, against the products during retraction of the reciprocating belt device, which retaining means are held still with respect to the supporting device during retraction of the reciprocating belt device, the advantage is achieved that upon any occurring fluctuations in the belt speed with respect to the retraction speed of the reciprocating belt device, displacements of the products are prevented, since they will run against the retaining means and be stopped.

Further, these retaining means have the advantage that what they prevent, in particular in the case of slightly or strongly deformable products, is that these products are not, or improperly, brought into or onto the supporting device. In fact, such products such as sacks of potatoes will tend to sag slightly on the belt, so that their width increases. As a result, the products will run against side guides and/or walls of the supporting device. This has as a consequence (in the known method and apparatus) that as a result of increased friction in particular, the products will shift and turn on the belt and consequently fail to end up in the desired position or shape on or in the supporting device. The retaining means prevent this in a particularly simple manner.

In a particularly advantageous embodiment, a method according to the invention is further characterized by the features according to claim 8.

Positioning products behind the retaining element while the reciprocating belt device is being retracted provides the advantage of enabling work to be done fast. When the reciprocating belt device is completely retracted, the retaining element can be moved away upwardly, in particular be swiveled and subsequently be moved over the products already disposed behind it, so that the retaining element can again be placed against the back thereof. It is then preferred that the retaining element, through second driving means, is moved beyond the free end of the reciprocating belt device to above the supporting device when the reciprocating belt device is completely retracted. Thus the products can be slightly pressed further on the supporting device.

In a further advantageous embodiment, a method according to the invention is characterized by the features according to claim 10.

During use of an apparatus according to the invention, it is to be prevented that when it is used for flexible sacks filled with articles as the products to be stacked, these articles might come out of the sacks. To that end, it is to be checked whether the sacks are adequately closed. In a method according to the present invention, this is checked in a particularly simple manner by keeping the sacks upside down after their being filled and closed, so that the articles press onto the side of the sacks that has been closed, for instance, by sealing. In the event of insufficient closure, the articles will fall out of the sack, which can be simply detected. This prevents poorly closed sacks from being brought onto the supporting devices.

In a further advantageous embodiment, a method according to the invention is further characterized by the features according to claim 11.

The use of guide means between which the products are passed provides the advantage of preventing the products from running against, for instance, the butt ends of the sidewalls of the supporting device, which might prevent the products from being brought between them onto the supporting device, at least from changing their position still. The guide means are then preferably of relatively thin design, so that they take up little space between the products and the sidewalls.

This invention further relates to an apparatus for bringing products onto pallets or like supporting devices, suitable in particular for carrying out a method according to the invention, characterized by the features according to claim 14.

Such an apparatus is particularly simple in construction, has a low susceptibility to failure, and makes it possible, in a particularly simple and accurate manner, for products to be placed and stacked on supporting devices, also when these products are relatively easily deformable. The engagement means can be made of relatively simple construction and during use ensure that at least the upper part stands at least partly still during retraction of the reciprocating belt device. In principle, the belt then does not need to be driven during use, so that at least one motor is saved with respect to the known apparatuses.

In an advantageous embodiment, an apparatus according to the invention is characterized by the features according to claim 15.

In this embodiment, the engagement means are particular simple in structure and use and do not need to be actively controlled.

In a further elaboration, an apparatus according to the invention is further characterized by the features according to claim 18.

With such apparatuses, supporting devices can be rapidly and simply filled with products, in particular with sacks filled with articles, while preventing improperly closed or unclosed sacks from being brought onto or into the supporting devices.

In an apparatus according to the invention, preferably a lifting device is used for moving supporting devices in a vertical sense. This enables in a simple manner products to be stacked in layers on the supporting devices without these products obtaining at any time an undesirably high falling height.

In the various dependent claims, further advantageous embodiments of methods and apparatuses according to the invention are described in more detail.

To clarify the invention, exemplary embodiments of a method and apparatus according to the invention will be further elucidated with reference to the drawing. In the drawing:
Fig. 1 shows in top plan view an apparatus according to the invention;
Fig. 2 shows in side elevation the apparatus according to Fig. 1;
Fig. 3 shows in perspective view a portion of an apparatus according to the invention;
Fig. 4 shows an engagement means for the belt of an apparatus according to the invention;
Fig. 5 shows in top plan view a carrousel for supplying and discharging and lifting supporting devices;
Fig. 6 shows the apparatus according to Fig. 5 in side elevation; and
Fig. 7 shows in top plan view and side elevation a portion of a sack filling apparatus, in particular a sack transfer apparatus according to the invention;
Fig. 8 shows in top plan view an alternative embodiment of a feeding apparatus according to the invention;
Fig. 9 shows a sectional side elevation taken on the line IX-IX in Fig. 8;
Fig. 10 schematically shows in perspective view a portion of a feeding apparatus according to the invention; and
Fig. 11 shows a lift and rotary platform with retaining means for use of a feeding apparatus according to Figs. 8 and 9.

In this description, equal or corresponding parts have equal or corresponding reference numerals. The exemplary embodiments shown in the drawing are shown by way of illustration only and are not to be construed as limiting in any way.

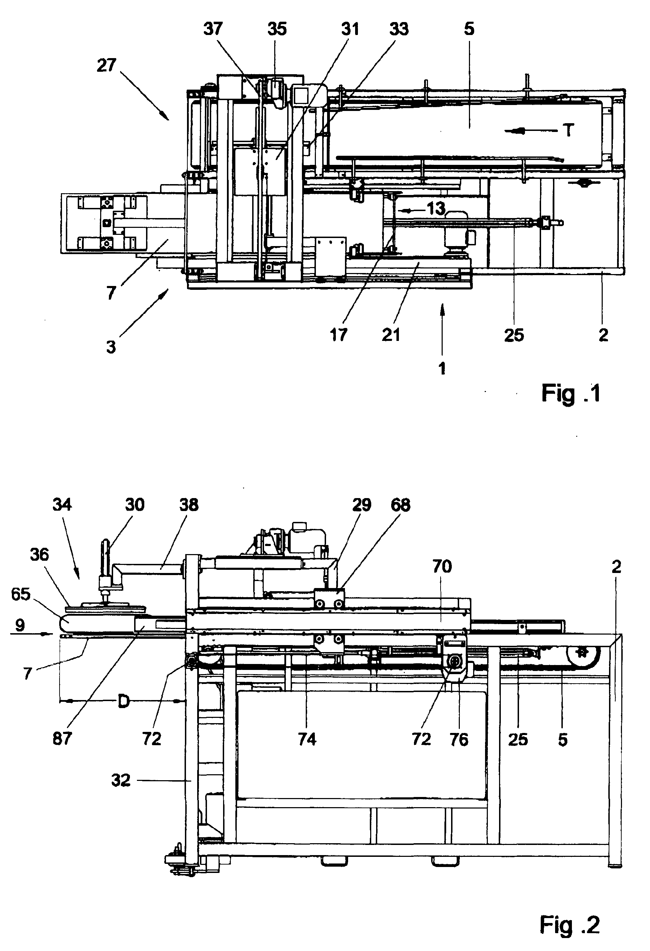

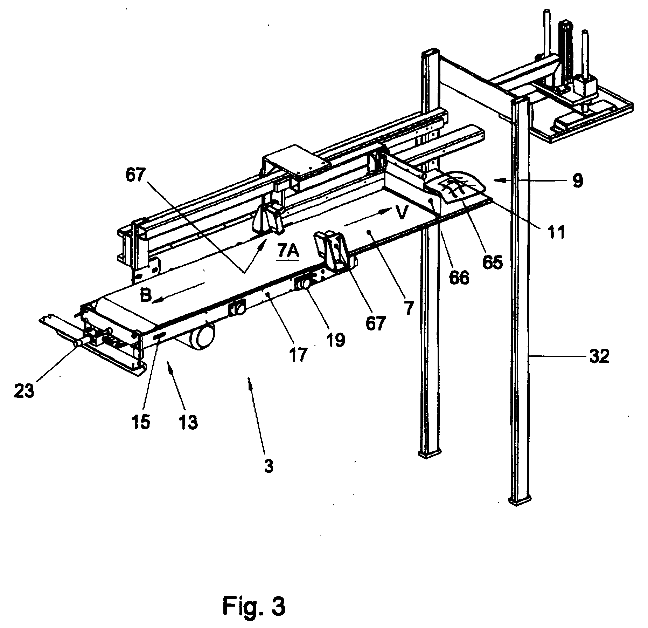

Figs. 1 and 2 respectively show in top plan view and side elevation an apparatus 1 according to the invention, comprising a supporting frame 2 which is fixedly and stationarily arranged, in which a reciprocating belt device 3 is fitted, next to a feeding conveyor 5. In the embodiment shown in Figs. 1 and 2, the reciprocating belt device has been moved forward; in the position shown in Fig. 3, it has been moved backwards, as will be elucidated in more detail hereinafter.

In this description, a reciprocating-type belt device is to be understood to mean at least a device comprising an endless belt 7 which, adjacent a free first end 9, has been passed over a reversing plate or reversing roller 11 and at the opposite second end 13 around an end roller 15. The end roller 15 and the reversing plate 11 are mounted in a reciprocating belt frame 17 which, using rollers or the like, is guided in guides 21 in the frame 2. Adjacent the second end 13, the reciprocating belt frame 17 is connected with a piston rod 23 of a piston-cylinder assembly 25, to be further referred to hereinafter as hydraulic cylinder 25. By means of this hydraulic cylinder 25, the reciprocating belt frame, together with the belt 7, can be moved between two extreme positions in forward direction V and backward direction B, parallel to the longitudinal direction of the belt 7. The extreme positions will be further discussed hereinafter. It is incidentally noted that instead of the hydraulic cylinder 25, other suitable and known driving means can be employed, for instance pneumatic driving means, ropes, geared belts, spindles and the like. Comparable reciprocating belt devices that are applicable within the invention are described in inter alia NL 1000966, DE 3300329, EP 0218833 and FR 2576294, which publications are considered to be incorporated herein by reference.

Above the belt 7 and an end 27 of the conveyor belt 5, an auxiliary frame 29 is arranged, in which transfer means 31 are mounted. These transfer means comprise a pusher plate 33 which using guides suitable for the purpose and a rope 37 driven by a motor 35, is movable over the surface of the conveyor belt 5 and the belt 7, between a first position adjacent the longitudinal edge of the conveyor belt 5 remote from the belt 7 and a second position adjacent the longitudinal edge of the belt 7 proximal to the conveyor belt 5. By means of the pusher plate 33, products disposed adjacent the end 27 on the conveyor belt 5 can be pushed in a direction at right angles to the conveying direction T, off the conveyor belt 5 onto the belt 7. The pusher plate 33 is mounted such that, when moving back in the direction remote from the belt 7, it can swivel upwards, so that it can be moved over newly supplied products disposed on the conveyor belt 5 and back to its original position. Thereupon, the transfer means 31 are ready again for transferring products from the conveyor belt 5 to the belt 7.

In Fig. 3, the reciprocating belt device 3 is shown in a position when retracted maximally backwards, that is, in the direction B, together with at least the forward legs 32 of the frame 2. As is clearly apparent, the first end 9 is then approximately adjacent the forward legs 32. In Figs. 1 and 2 the reciprocating belt device 3 is shown in the position when moved maximally forwards, that is, in the direction V, in which the free first end 9 extends over a distance D beyond the legs 32. Provided above the belt 7 are height detection means 34 which comprise a height plate 36 which is vertically movable by means of a piston-cylinder assembly 30 extending substantially vertically. The purpose of this will be discussed in more detail hereinafter.

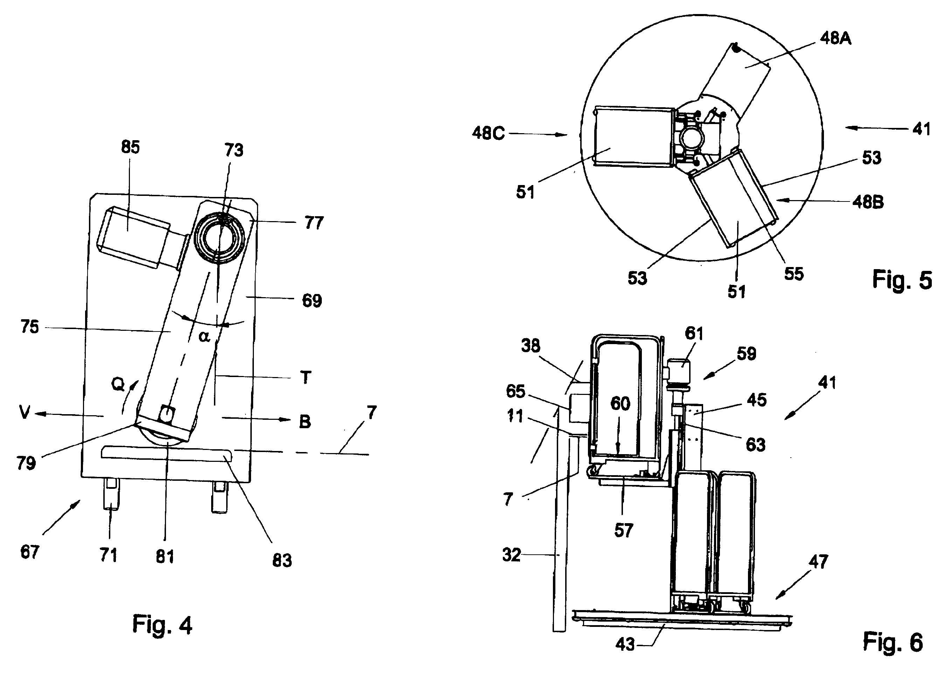

Adjacent the forward end of the apparatus 1, that is, in front of the legs 32, during use, placing means are disposed, as shown in Figs. 5 and 6. Schematically represented in Fig. 6 are the arm 38 of the height detection means 34 and the belt 7 with reversing plate 11, as well as a part of the frame 2 with the forward legs 32. The placing means 41 are constructed as a carrousel 47 rotatable on a ground plate 43 about a vertical column 45, on which carrousel 47 three positions are shown, displaced through an angle of 120° relative to each other. The top plan view shown in Fig. 5 clearly shows an empty first position 48A, as well as a second position 48B on which a supporting device, in particular a roller container 51 with sidewalls 53 and a back wall 55, is placed. In the third position 48C a second roller container 51 is shown, which is set up on a platform 57 of a lifting device 59. By means of a lift mechanism 63 driven by a motor 61, the platform 57 can be moved along the column 45 between an extreme upwardly moved position, which has been virtually reached in Fig. 6, and an extreme downwardly moved position in which the upper side of the platform 57 is approximately flush with the upper side of the carrousel 47. In the extreme downward position, the roller container 51, by means of the carrousel 47, can be moved away above the platform 57, while a next roller container 51 is moved to a position above the platform. Due to the provision of three positions 48, in each case an empty container 51 can be placed in the first position 48A, while a full container can be taken away from the second position 48B, and meanwhile a roller container 51 can be lifted onto the platform 57, that is, into the third position 48C, and can be filled with products 65.

Arranged above the belt 7 is a retaining element 66 arranged to be movable using guide means 67 on a guide beam 70. A rope 74 passed over end rollers 72 is connected with the guide means 68. One of the end rollers 72 is drivable with a motor 76 for driving the rope 74. During the forward movement of the reciprocating belt device 3 in the direction V, the retaining element 66 can move along in forward direction, driven by the motor 76 and rope 74 or optionally through directly coupling to the movement of the reciprocating belt device 3. In the extreme forward position of the reciprocating belt device 3, the retaining element 66 preferably abuts against the side of the products 65 adjacent the free end 9 that faces backwards. Upon retraction of the reciprocating belt device 3, the products 65 cannot pass the retaining element 66. Moreover, the retaining element 66 can be moved slightly further in the forward direction V by means of the rope 74 and the motor 76, for pushing on the products 65.

What is prevented by means of the retaining element 66 is that the products can move backwards over the belt 7, which is advantageous in particular in the case of slightly or strongly deformable products such as sacks filled with loose articles such as potatoes, granules or the like. These will tend to deform slightly, in particular sag, thereby increasing their width. This means that the products can no longer be simply pushed between the sidewalls 53 of the roller container 51. The danger exists that the products come to lie against a butt end of a wall 53 and/or will experience relatively much friction relative to the wall 53 and/or guide plates 87 extending along the inside thereof. As a result, the products may exhibit a tendency to shift and/or turn. This is simply prevented by the retaining element 66. The products will thereby be held in the desired stacking pattern.

At some distance from the free end 9, on opposite sides of the belt 7, engagement means 67 are provided, shown in more detail in side elevation in Fig. 4. Each engagement means 67 comprises a supporting plate 69 which is fixedly connected with the frame 2, for instance through bolts 71. The supporting plate 69 extends approximately vertically. Adjacent an upper end of the supporting plate 69, a pivoting axis 73 extends approximately horizontally, such that the pivoting axes 73 of the engagement means located on opposite sides are parallel, preferably in line with each other. A pivoting arm 75 is pivotally connected adjacent an upper end 77 thereof to the pivot 73. Adjacent its opposite, second end 79, the pivoting arm 75 has a roller 81 bearing-mounted therein, which roller is preferably provided with a ratchet mechanism or like device which ensures that the roller 81 can rotate in one direction only, viz. in the direction Q, clockwise in Fig. 4. The purpose of this will be elucidated in more detail hereinafter.

Adjacent the lower end of the supporting plate 69, a press-on surface 83 extends at right angles to the supporting plate 69 and approximately parallel to the plane of the belt 7. The pivoting arm 75 has a length such that when the roller 81 is disposed against the press-on surface 83, at least a part of the belt 7 disposed thereon, the pivoting arm 75 includes an angle a with the vertical, such that the roller 81 is to some extent in leading position in the forward direction V with respect to the pivoting axis 73. By means of a spring mechanism 85, the pivoting arm 75 is slightly biased in the direction of the vertical, such that the roller 81 presses slightly onto the upper side of the belt 7. The part of the belt 7 confined between the roller 81 and the press-on surface 83 is the upper part 7A thereof, on which part the product 65 are normally disposed. An engagement means 67 as shown in Fig. 4 functions as follows.

In the position shown in Fig. 4, the roller 81, inter alia as a result of gravity and the action of the spring 85, presses onto the upper side of the top part 7A of the belt 7, so that it is slightly pressed against the press-on surface 83. Now, when on the belt 7 in the direction B a force is exerted as will occur, for instance, when the reciprocating belt device 3 is pulled away backwards, the pivoting arm 75 is forced further in the direction of the vertical T, the more so since the roller 81 cannot rotate in the direction opposite to the direction Q. As a result, the roller 81 will clamp the belt 7 against the press-on surface 83, thereby preventing movement of the belt 7, at least of the upper part of the belt 7 located on the side of the rollers 81 remote from the free end 9. If on the other hand a force is exerted on the belt 7 in the direction V, for instance as a result of the forward movement of the reciprocating belt device 3, the pivot arm 75 can be carried along to some extent, while moreover the roller 81 can rotate in the direction Q, so that the belt 7, at least the upper part 7A, can pass freely between the press-on surface 83 and the roller 81. It is incidentally noted that the brake mechanism on the roller 81, though advantageous, does not seem requisite. On the other hand, by the use of the roller 81, any undue wear of the belt 7 can be prevented.

In an embodiment not shown, the engagement means are designed to be actively controlled, for instance energized by a piston-cylinder assembly. In this embodiment, during the retraction of the reciprocating belt device 3, the or each engagement means 67 is energized so that the upper part 7A is clamped, whereas it is released upon advancement of the reciprocating belt device 3. To that end, for instance, the spring 85 in Fig. 4 can be replaced with a piston-cylinder assembly or such an assembly can be used instead of the pivoting arm 75. In the embodiments described, as desired, a roller 81 may or may not be used.

An apparatus 1 according to the invention can be used as follows.

A roller container 51 is lifted by means of the lifting device 59, such that the bottom 60 of the roller container 51 is just below the level of the underside of the belt 7, while the front edge of the bottom 60 is located adjacent the legs 32 of the frame 2. By means of the conveyor belt 5, products, for instance sacks 65 filled with potatoes, are supplied, for instance one by one. By means of the transfer means 31, the sacks 65 are shoved from the conveyor belt 5 onto the belt 7, such that, for instance, in each case two sacks 65 are disposed next to each other on the upper part 7A of the belt 7. If these are the first two sacks, they will be pushed onto the belt 7 with the reciprocating belt device 3 in the backwardly moved position, as shown in Fig. 3. Thereafter, the reciprocating belt device 3 is moved forwards in the direction V, such that the free end 9 is brought between the sidewalls 53 close to the rear wall 55 of the roller container 51. The sacks 65 are then located straight above the bottom surface 60 of the container 51 in a position in which they are to be deposited in the container 51. The retaining element 66 is then arranged against the side of the sacks 65 facing backwards. Thereupon, by means of the hydraulic cylinder 25, the reciprocating belt device 3 is retracted backwards, whereby in the manner described earlier, the belt 7 is gripped between the rollers 81 and the press-on surfaces 83 of the engagement means 67. As a result of this, the belt 7 is rotated around the reversing plate 11 and the end roller 15 and pulled from under the products 65, with the products 65, viewed at least in horizontal direction, standing still with respect to the container 51, partly as a consequence of the urging force of the retaining element 66. When the reciprocating belt device 3 has been retracted, the sacks 65 will have moved down relative to their initial position and be disposed on the bottom 60 of the container 51. Due to the retaining element 66 being moved slightly forwards relative to the free end 9, the sacks 65, if necessary, are slightly pressed upon. As shown in Fig. 2, guide elements 87 are provided next to the belt 7, formed by thin plate parts, which are located between the sidewalls 53 and the products 65. As a result, it is ensured that the sacks 65 can be readily passed between the sidewalls 53.

When the reciprocating belt device 3 has been moved forward, and sacks 65 are brought into the roller container 51, then by means of the transfer means 31 newly supplied sacks 65 are brought, next to each other, onto the upper part 7A of the belt 7, behind the retaining element 66. These sacks too will retain their position upon retraction of the reciprocating belt device 3. After the first-mentioned sacks have been deposited in the container, the retaining element 66 is retracted over the sacks 65 located behind it, for instance in that the retaining element 66 can swing forwards and upwards and can move back into the vertical position behind the newly deposited sacks 65, whereafter these sacks can be transferred to the container in the manner described earlier.

The height detection means 34, after a layer of sacks 65 has been deposited in the container 51, are moved down onto the sacks 65. Thereafter the container 51 is moved down by means of the lifting device 59, so far and until it has been established by means of the height detection means 34 that the container 51 has been lowered by one layer thickness. Next, the height detection means are moved back up, so that a new layer of sacks 65 can be placed in the container 51.

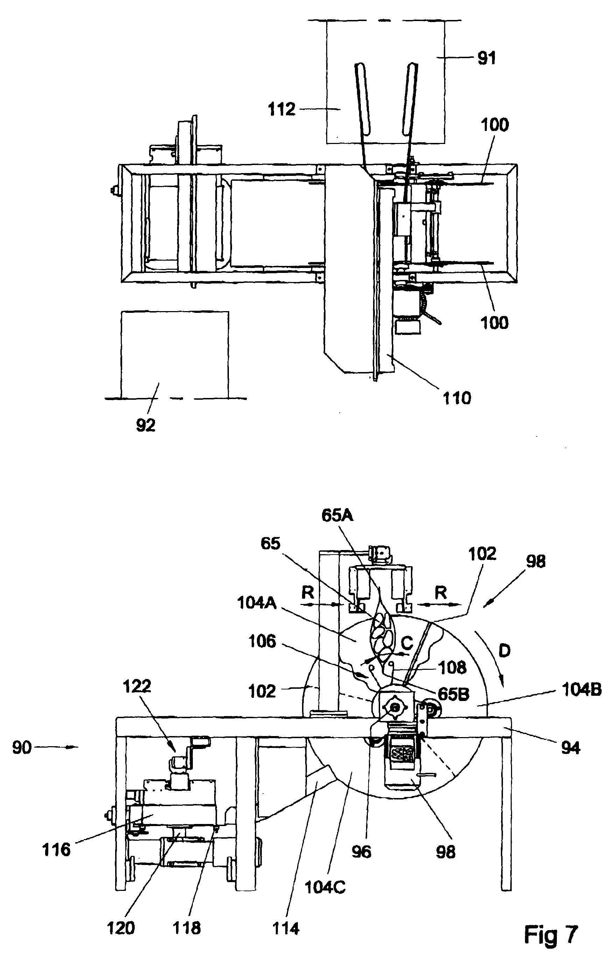

Fig. 7 shows in top plan view and side elevation a sack transfer apparatus 90 according to the invention. This sack transfer apparatus 90 is included between a sack filling apparatus, schematically represented with 91 and a conveyor belt 92 which links up with, at least leads to, the conveyor belt 5 of the apparatus 1 according to the invention. In the side elevation in Fig. 7, the sack filling apparatus 91 and the conveyor belt 92 have been omitted for the sake of clarity. A sack filling apparatus 91 is sufficiently well known from practice.

The sack transfer apparatus 90 comprises a frame 94, window-shaped in top plan view, on which a horizontal rotary shaft 96 is mounted in suitable bearings. The rotary shaft 96 can be driven by means of a motor 98 in the direction D. Mounted on the rotary shaft 96 is a wheel 98. This wheel 98 comprises two circular sidewalls 100, extending vertically, parallel to each other, held in spaced apart relation by intermediate walls 102 extending at right angles thereto. In the embodiment shown, three intermediate walls 102 are provided, mutually including an angle of 120°. In the side elevation in Fig. 7, a portion of the front sidewall 100 has been cut away. Between two intermediate walls 102, respective compartments 104A, B, C are enclosed. Adjacent the rotary shaft 96, in each compartment 104 a clamping mechanism 106 is provided, comprising two clamping arms 108, which are biased in the closed direction C. in Fig. 7, in the first compartment 104A the clamping arms 108 are shown in the open position. It is incidentally noted that at least one of the clamping arms 108 may also be received in, or be formed by, an adjacent intermediate wall 102. Provided above the wheel 98 is a guide rail 110, which extends parallel to the rotary shaft 96. Movably arranged on the guide rail 110 is a clamping jaw 112. The clamping jaw 112 is movable between a position as shown in Fig. 7, in which it is opened and has been moved into the sack filling apparatus 91, and a second position, in which the clamping jaw 112 is closed and has been moved to above a compartment 104 of the wheel 98. In the sack filling apparatus 91, a sack 65 filled with products and sealed, in the embodiment shown for instance a sack of potatoes, can be clamped adjacent the sealed side 65A and be moved into, at least above the compartment 104A. There, the clamping jaw 112 can be opened in the direction R, so that the sealed end 65A of the sack 65 is released and the sack 65 falls into the compartment 104A. The end 65B, located opposite the sealed end 65A, is moved between the clamping arms 108 of the clamping mechanism 106 and clamped therein in that the clamping arms 108, preferably relatively slowly, are closed in the direction C. The clamping arms 108 can be actively controlled by means of, for instance, a piston-cylinder assembly or with a suitable cam mechanism cooperating with the rotary shaft 96 or, for instance, the frame 94. Operation of the clamping arms 108 will be immediately clear to one skilled in the art.

When the sack 65 has been gripped by means of the clamping mechanism 106 and has been released by the clamping jaw 112, the wheel 98 is rotated in the direction D, whereby the sack 65 will end up suspended from the clamping arms 108. The potatoes, at any rate products, contained in the sack, will rest on the sealed side 65A of the sack 65. When the seal of the end 65A is insufficiently strong or, for instance, has not been provided, the potatoes will fall from the sack 65. This can be readily detected, for instance through pressure means, a light sensor or through an operator, whereafter the sack 65 in question can be released and can be carried outside the apparatus 90.

When it has been found that the sack 65 is sufficiently closed, the wheel 98 is rotated further, until the intermediate wall 112 following the sack 65 has been moved near or beyond the proximal end of a chute 114. This chute 114 is inclined downwards from the end referred to, in the direction of a platform 116. In the position described, next, the sack 65 can be released by the clamping mechanism 106, whereafter the sack 65 will slide along the chute 114 onto the platform 116. By way of four load cells 118 or like elements, the platform 116 is imposed on a vertically extending rotary shaft 120, allowing the platform 116 to be rotated, for instance through 90° or 180°. As a result, the sack 65 on the platform 116 can be brought into any desired direction of orientation, for instance to obtain a printing in the desired position. In principle, it is thereby determined in what position the sacks 65 will be brought onto a supporting device 51. By means of the load cells 118, the weight of the respective sack 65 can be simply determined. If the weight is unsuitable, the sack can be carried off outside the apparatus; if the weight is suitable, the sack 65 can be simply brought from the platform 116 onto the conveyor belt 92, for instance by tilting the platform using tilting means 122.

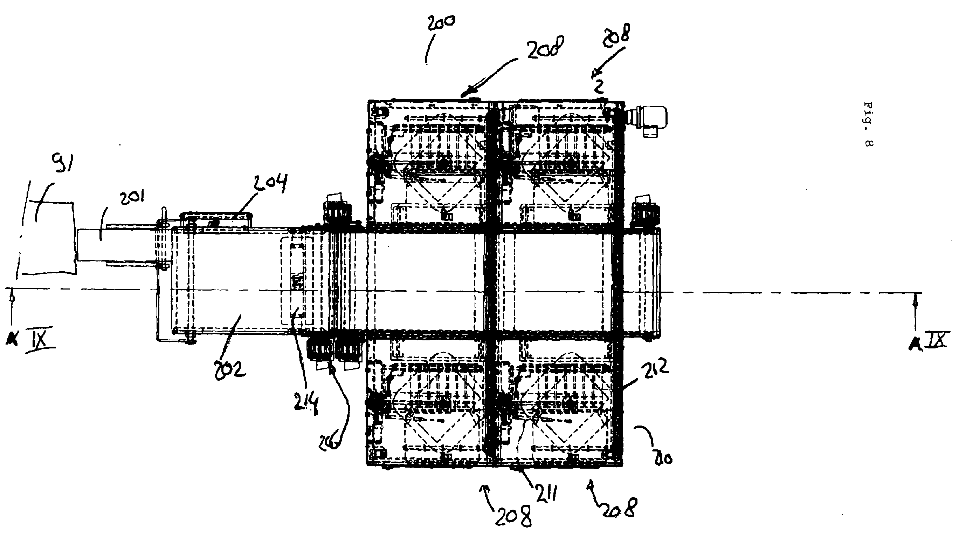

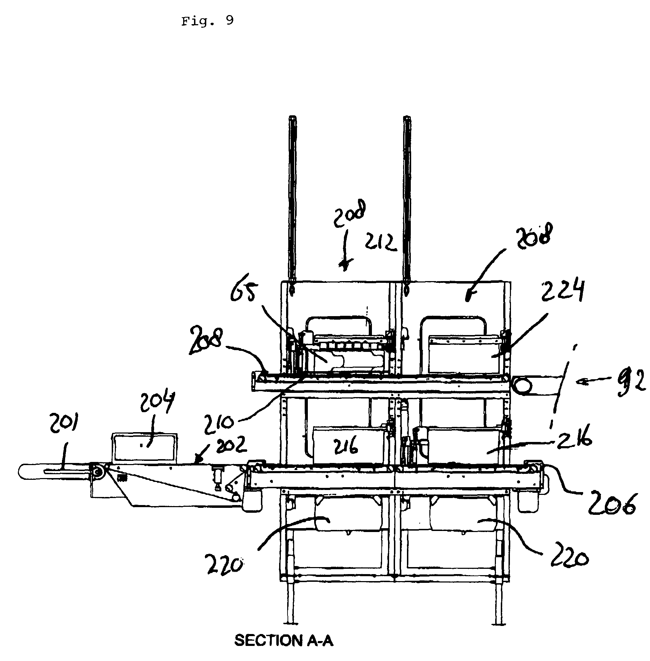

Instead of the sack transfer apparatus 90 shown in Fig. 7, a sack transfer apparatus, at least feeding apparatus 200, according to Figs. 8-11 can be used. This feeding apparatus 200 is again included between a sack filling apparatus 91 and a conveyor belt 92, which links up with, at least leads to, the conveyor belt 5 of the apparatus according to the invention.

This feeding apparatus 200 comprises a feeding belt 201 on which sacks are supplied standing up and are handed over to a first conveyor belt 202, next to a pushing valve 204. With this pushing valve 204, the sacks 65 (not shown) are pushed over into a flat position on the first conveyor belt 202, with which the sacks 65 are conveyed lying flat, to a lower conveyor belt 206 between four lifts 208. Provided above the lower conveyor belt 206 is an upper conveyor belt 208 onto which the sacks 65 can be transferred by means of the lifts 208. In the lifts 208, the sacks 65 can be clamped between a rotary platform 210 and fingers 212 arranged above it, whereafter the rotary platform can be tilted in a manner to be further described hereinafter in order to test the closure of the sack 65. This apparatus operates as follows.

A sack 65 is supplied in upright position over the supply belt 201 and laid flat with the pushover valve 204. Next, it is passed with the first conveyor belt 202 to the lower conveyor belt 206, thereby passing a vibrating strip 214. With this vibrating strip, the articles in the sack 65 are uniformly distributed. When a sack 65 has been brought between two oppositely arranged lifts 208, the sack 65 is pushed with a pusher plate 216 off the belt onto a rotary platform 210 in the lift 208. The pusher plate 216 is then ready to push a next sack 65 from the lower conveyor belt 206 over into the opposite lift 208. When the sack 65 in the lift 208 has been shoved onto a rotary platform 210, the rotary platform 210 can be rotated by means of a gas cylinder 211 to bring the sack 65 in a desired position. Next, the clamping fingers 212 are pressed onto the sack by means of a second spring 213, whereafter the rotary platform 210 with the clamping fingers 212 and the sack 65 can be tilted around a horizontally extending axis 218 under the rotary platform 210, such that a longitudinal edge of the sack 65, in particular a sealed longitudinal edge, is moved downwards to some extent. If the respective longitudinal edge is not properly closed, the articles will fall from the sack 65, onto a discharge plate 220, whereafter the sack 65 can be released. If, on the other hand, the sack 65 proves to be sufficiently closed, the platform 210 is brought back into the horizontal position and, through lift means 222 suitable therefor, moved up with the platform 210 and the fingers 212. The rotary platform is moved up so far as to be approximately flush with the upper belt 208. At that point, by means of a positioning valve 208, the sack 65 is pushed off the platform onto the upper conveyor belt 208. After the desired number of sacks 65, for instance two pairs of two, have been placed next to the respective lifts onto the upper conveyor belt 208, the second conveyor belt 208 is driven in the direction of the discharge belt 92, for further processing the sacks. Simultaneously, or prior thereto, the platforms 210 with the fingers 212 have been returned again to the lower conveyor belt 206 for taking up further sacks. The sacks 65 can also be rotated with the platforms 210 after these have been moved up.

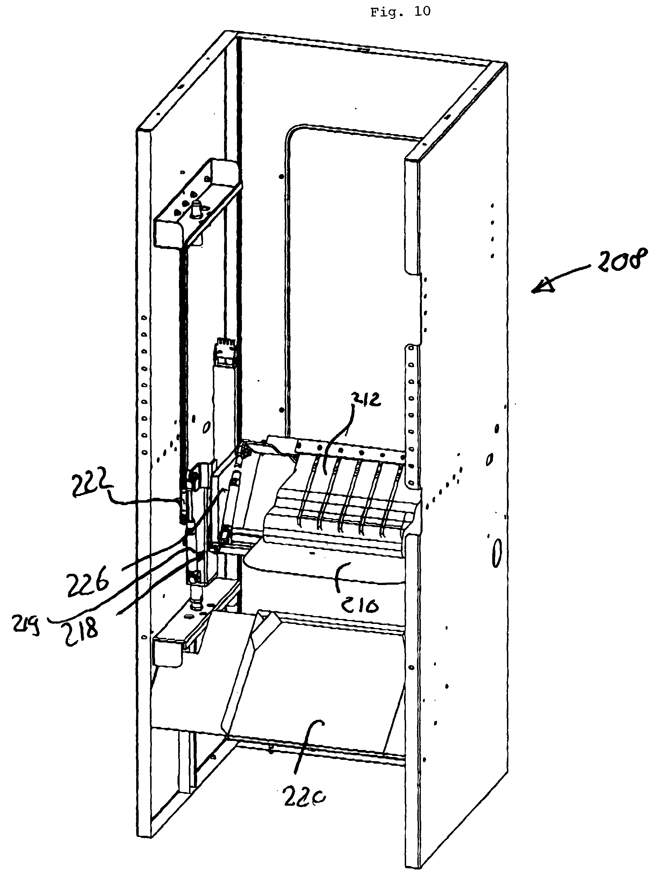

As is clearly apparent from Fig. 10, the lifts 208 have a modular and cabinet-shaped structure, so that a desired number of lifts 208 can be provided. Also visible is a housing 226 in which the fingers 212 and the platform 210 are accommodated, which housing can be tilted about the axis 218 by means of a third gas spring 219. The fingers 212 are manufactured, for instance, from spring steel with plastic ends, so that they can adjust to the shape of the sack 65 without damaging it, while the sack 65 is nonetheless properly gripped. The lift means 222 can comprise, for instance, a rack railway, geared-belt drive, cylinder-piston assembly or like means for displacing the platform 210 with the fingers 212. Such solutions will be immediately clear to one skilled in the art.

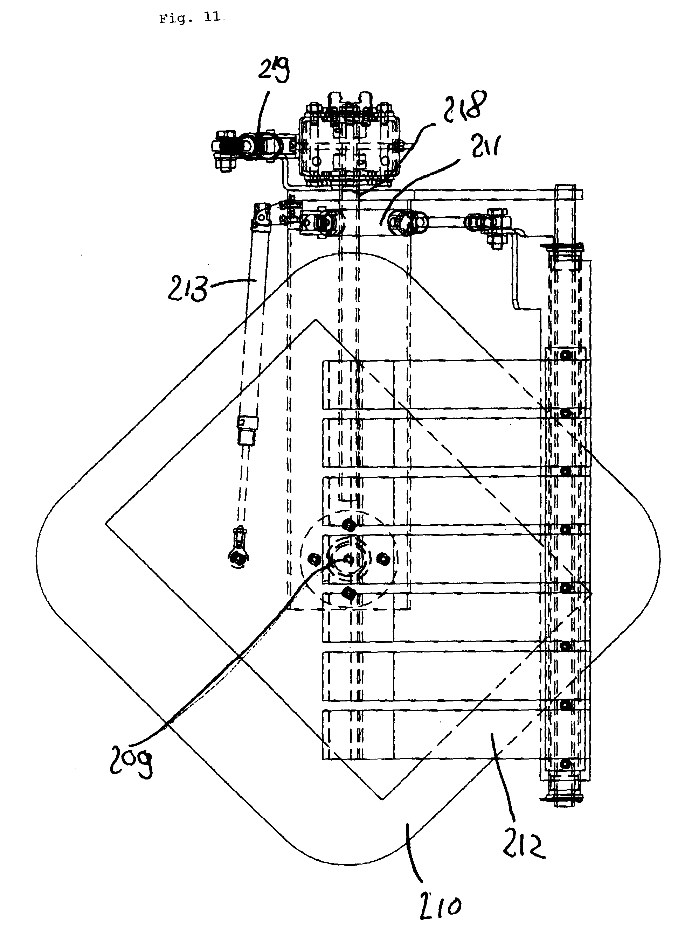

In the condition shown in Fig. 11, the platform 210 has been rotated through 45° with respect to an initial position, about a rotation axis 209 extending substantially vertically, at least at right angles to the pivoting axis 218.

It will be clear that the invention is not limited in any way to the embodiments shown in the description and the drawing. Many variations thereof are possible within the scope of the invention outlined by the claims.

Thus in a reciprocating belt device 3 according to the invention, the engagement means 67 can be designed in a different manner, for instance in that on opposite sides of the belt an actively controlled clamp can engage the upper part, or by providing, for instance, a toothing or a perforation pattern in or along the longitudinal edges of the belt 7 engageable by suitable engagement means such as a toothed element or a pin, for at least temporarily retaining the respective position of the upper part. Further, the products can be supplied to the belt in other ways, for instance in a direction at right angles to the longitudinal direction of the belt, or from two sides. Also, a different manner of driving the reciprocating belt device can be chosen, such as electrically.

In a transfer apparatus according to the invention, the chute 114 can link up directly with the conveyor belt 92 when the sacks 65 are supplied in the desired position by the sack filling apparatus 91. The clamping jaw can be replaced with, for instance, cooperating conveyor belts, clamping belts, or the like. Also, such a transfer apparatus 90 can be omitted when the products to be loaded can be tested in a different manner. Further, the supporting devices can naturally be supplied and discharged in different manners, and it is moreover possible to have the reciprocating belt device 3, at least the belt 7 thereof, change in position for stacking layers of products in or on a supporting device. To that end, the reciprocating belt device 3 can be arranged so as to be, for instance, pivotable in vertical direction. Also, an apparatus according to the invention can be used, for instance, for transferring products to other conveying means, for instance a further conveyor belt, a roller conveyor or the like.

The containers for receiving the sacks can also be supplied in a different manner, for instance via a rail system, whereby the containers are supplied from a first side onto a lift platform, are filled on the lift platform in the manner described earlier, and are carried off on the opposite side of the lift platform.

These and many comparable variations are understood to fall within the scope of the invention outlined by the claims.

## Claims

1. A method for bringing products, in particular deformable products, onto pallets or like supporting devices, wherein a number of products are brought onto a belt of a reciprocating belt device or like transfer device, whereafter the reciprocating belt device is partly brought into a position above a supporting device, such that the products extend in or above the supporting device, whereafter the reciprocating belt device is retracted, with simultaneous manipulation of the belt, such that the upper surface of the belt, at least the products, stand still relative to the supporting device, viewed in the direction of movement of the reciprocating belt device, and leave the belt along a free end, wherein mechanical means are used with which the position of the products with respect to the supporting device viewed in horizontal direction is retained when fluctuations occur in the speed of movement of the reciprocating belt device, in particular with fluctuations in said speed of movement relative to the speed of movement of the belt.

2. A method according to claim 1, wherein during retraction of the reciprocating belt device, at least the upper part of the belt is engaged and is retained using engagement means, such that upon retraction of the reciprocating belt device the upper part, at least adjacent the engagement means, is held still, in particular relative to the supporting device and/or a stationary frame of the apparatus.

3. A method according to claim 2, wherein the belt is not driven when the upper part is retained.

4. A method according to claim 2 or 3, wherein during retraction of the reciprocating belt device, a first number of products are moved off the belt, at least the belt is pulled away from under the products, while a further number of products is brought onto the upper part of the belt, remote from the free end.

5. A method according to any one of the preceding claims, wherein during retraction of the reciprocating belt device, at least one retaining element is held against the products, on the side thereof remote from the free end, which retaining element is held still with respect to the supporting device during retraction of the reciprocating belt device to outside, viewed in top plan view, the contours of the supporting device, at least the intended position for the products thereon.

6. A method according to any one of the preceding claims, wherein during retraction of the reciprocating belt device at least one retaining element is moved against the products, on the side thereof remote from the free end, while the respective retaining element, with the reciprocating belt device substantially completely retracted, is moved, at least held, beyond said free end of the reciprocating belt device to above the supporting device, thereby urging the products further above the supporting device.

7. A method according to claim 5 or 6, wherein the at least one retaining element, after release of the products, is moved, in particular swiveled, upwards, to a position in which it is retracted over products disposed on the belt, and on the side of the respective products remote from the free end is moved thereagainst.

8. A method according to claim 4 and any one of claims 5-7, wherein the further number of products is deposited on the side of the retaining element remote from the free end.

9. A method according to any one of the preceding claims, wherein a number of supporting devices is included in a carrousel, while in each case one of the supporting devices is placed in a lifting device and is moved in vertical direction therewith, such that a number of layers of products can be placed on or in the supporting device.

10. A method according to any one of the preceding claims, wherein, as products, flexible sacks filled with articles, such as potatoes, are used; wherein the sacks are filled in a sack filling machine and are closed, whereafter the sacks are engaged adjacent the bottom, at least the side closed during filling, and are held upside down, that is, with the bottom up, such that in case of poor closure, articles fall from the sack, whereafter the closed sacks, via at least one belt conveyor or roller conveyor, are brought onto the belt of the reciprocating belt device, while the sacks not closed, or improperly closed, are carried off.

11. A method according to any one of the preceding claims, wherein, when the products are being brought onto or into the supporting device, guide means are held along the products on the belt, which guide means extend at least partly between walls of the supporting device, such that the products are slightly compressed in a direction at right angles to the direction of movement of the reciprocating belt device and are readily moved between said walls.

12. A method according to any one of claims 1-11, wherein the products are supplied with a feeding conveyor belt or feeding roller conveyor which extends parallel to and partly next to the belt of the reciprocating belt device, while transfer means are provided with which the products are shoved from the feeding conveyor belt or feeding roller conveyor to the belt, in particular onto the upper part thereof, remote from the free end.

13. A method according to claim 12, wherein the transfer means comprise a pusher plate which is applied against a side of the products to be transferred, whereafter the products are shoved onto the belt of the reciprocating belt device, whereafter the pusher plate is moved upwards, such that the pusher plate can be moved over products newly supplied on the conveyor belt or roller conveyor.

14. An apparatus for bringing products onto pallets or like supporting devices, in particular for carrying out a method according to any one of the preceding claims, comprising a reciprocating belt device, comprising driving means for moving the reciprocating belt device in a forward and backward direction, the reciprocating belt device further comprising a belt which has been passed over at least two divert elements, such that in each case at least one upper part is provided on which products can be placed, while engagement means are provided for engaging the upper part of the belt during the backward movement of the reciprocating belt device, such that said upper part is held still at least adjacent the engagement means, while the free end is brought near said engagement means, while said upper part, upon forward movement of the reciprocating belt device, can be released by the engagement means.

15. An apparatus according to claim 14, wherein the engagement means comprise at least one pivoting body which lies against a side of the belt, while opposite the pivoting body a press-on surface is provided, the arrangement being such that upon backward movement of the reciprocating belt device the upper part is clamped between the pivoting body and the press-on surface, and upon forward movement of the reciprocating belt device the upper part can pass freely between the pivoting body and the press-on surface.

16. An apparatus according to claim 14 or 15, wherein above the upper part a retaining element is provided which is movable in guide means extending approximately parallel to the sides of the belt, while the retaining element in a first position extends above the upper part, such that it can lie on a rear side of the products against the products on the upper part, while the retaining element can be brought into a second position in which it can be moved over such products, while coupling means are provided with which, upon forward movement of the reciprocating belt device, the retaining element, in the first position, is coupled with the reciprocating belt device, such that, synchronized, it moves along in forward direction and is then arranged stationarily with respect to the upper part, while upon backward movement of the reciprocating belt device the coupling means are released, such that the retaining element in the first position is stationarily arranged with respect to the engagement means, while second driving means are provided which are adapted, upon complete backward movement of the reciprocating belt device, to move back the retaining element near to the end of the reciprocating belt device remote from the free end.

17. An apparatus according to claim 16, wherein the second driving means are adapted, with the reciprocating belt device moved completely backwards, to move the retaining element slightly forward with respect to the free end of the reciprocating belt device, before moving it back to near the opposite end.

18. An apparatus according to any one of claims 14-17, wherein a sack filling apparatus is provided which through transfer means is coupled with the reciprocating belt device, which sack filling apparatus comprises means for filling the sacks through a filling opening, and subsequently sealing or otherwise closing the filled sacks, while, further, means are provided for engaging the sacks on the side opposite the filling opening, such that the sacks are held upside down, such that insufficiently closed sacks can be detected, and weighing means connected thereto are provided for weighing the filled sacks, while improperly filled sacks can be detected.

19. An apparatus according to any one of claims 14-18, wherein adjacent the free end of the reciprocating belt device, placing means are provided which comprising at least one lifting device for displacing a supporting device in vertical direction, such that, viewed vertically, it can be displaced with respect to the free end of the reciprocating belt device, for stacking layers of products thereon.

20. An apparatus according to any one of claims 14-18, wherein guide means are provided on opposite sides of the reciprocating belt device, between which the products can be slightly compressed, which guide means extend at least slightly beyond the free end of the reciprocating belt device when the reciprocating belt device is in a position moved forward substantially completely.
